# EUROPEAN PATENT APPLICATION

(11) **EP 3 508 334 A1**
(43) Date of publication of application: **10.07.2019**
(21) Application number: 18150597.5
(22) Date of filing: 08.01.2018
(51) Int. Cl.: B29C 64/393, B33Y 10/00, B33Y 30/00, B33Y 50/02, B29C 64/135, B29C 64/153, B29C 64/264

(54) **APPARATUS FOR ADDITIVELY MANUFACTURING OF THREE-DIMENSIONAL OBJECTS**

(71) Applicant: CL Schutzrechtsverwaltungs GmbH, 96215 Lichtenfels (DE)
(72) Inventor: Reichenbacher, Markus, 96472 Rödental (DE); Stammberger, Jens, 96472 Rödental (DE); Vierling, Christoph, 96237 Ebersdorf (DE)
(74) Representative: Hafner & Kohl

(57) **Abstract**

Apparatus (1) for additively manufacturing of three-dimensional objects (2) by means of successive layerwise selective irradiation and consolidation of layers of a build material (3) which can be consolidated by means of an energy beam (4), wherein the apparatus (1) comprises an irradiation device (5) that is adapted to generate at least one energy beam (4) for irradiating the build material (3), wherein a safety device (10) is provided comprising at least one detection unit (11) adapted to detect process light (12) that is generated by the irradiation of build material (3), wherein the safety device (10) is adapted to control the irradiation device (5) dependent on the detection result.

## Description

The invention relates to an apparatus for additively manufacturing of three-dimensional objects by means of successive layerwise selective irradiation and consolidation of layers of a build material which can be consolidated by means of an energy beam, wherein the apparatus comprises an irradiation device that is adapted to generate at least one energy beam for irradiating the build material.

Apparatuses for manufacturing three-dimensional objects via successive layerwise selective irradiation and consolidation of a build material are generally known from prior art, such as selective laser melting apparatuses or selective laser sintering apparatuses, for instance. Said apparatuses comprise irradiation devices that are adapted to generate one or more energy beams that can be guided over a surface of build material to irradiate and thereby consolidate the build material.

Due to the high intensities of the energy beams or energy beam powers of the energy beams that are used in the additive manufacturing process, it is important to ensure that the energy beam cannot exit the process chamber of the apparatus, in which the additive manufacturing process is performed, in particular in which the build material is irradiated. To ensure that the energy beam cannot exit the process chamber, it is for example known from prior art to fully enclose the process chamber, e.g. with wall elements. As it is still possible that the energy beam may pierce the enclosure of the process chamber, it is known to include a safety device, for example a so-called "beam spy", in the walls of the process chamber, wherein the safety device is adapted to switch of the energy beam, if one of the process chamber walls is pierced by the energy beam. Hence, it is ensured that personnel cannot come in contact with or even be harmed by the energy beam, as the energy beam is switched off before it can exit the process chamber.

However, it is still required that the energy beam pierces, e.g. melts through, a first (inner) wall of the process chamber to be detected via the safety device. Further, the energy beam can still be misaligned in that or misguided in that the energy beam irradiates components of the apparatus inside the process chamber, such as walls, or functional units, such as application units, stream generating units or the like. Thus, due to a misguiding or a misalignment of the energy beam, damage can be caused to valuable units of the apparatus.

It is an object of the present invention to provide an improved apparatus for additively manufacturing three-dimensional objects, in particular wherein the process safety and/or the industrial safety is improved.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the inventive apparatus comprises an irradiation device that is adapted to generate an energy beam, wherein the energy beam is guided on a surface of build material to selectively irradiate the build material. The safety device the inventive apparatus comprises allows for the detection of whether the energy beam that is generated via the irradiation device irradiates build material or whether the energy beam is guided onto another structure of the apparatus, such as a process chamber wall or a functional unit of the apparatus, such as a build material application unit.

The invention is based on the idea that a safety device is provided that comprises at least one detection unit that is adapted to detect process light that is generated by the irradiation of build material, wherein the safety device is adapted to control the irradiation device dependent on the detection result. Thus, the detection unit allows for detecting process light that is generated by the irradiation of build material. By detecting the process light, the safety device can detect whether the energy beam is generated and guided on the build material ("irradiates build material"), in particular onto a build plane in which build material is arranged, or whether no process light is generated. In case the energy beam is generated and guided into the process chamber and no process light is generated, the energy beam is guided onto another structure of the apparatus, such as a process chamber wall or a functional unit of the apparatus. Hence, the irradiation device may be controlled dependent on the detection result.

The term "process light" may particularly refer to electromagnetic radiation that is generated by irradiating build material with the energy beam. Process light can be radiation that is visible to the human eye, for example in a wavelength range between 400 nm and 700 nm. Thus, process light merely refers to radiation that is directly generated due to the irradiation of a material, for example build material, with the energy beam used for the consolidation of build material in the additive manufacturing process. Typically, process light is light that is emitted from build material that is directly irradiated with the energy beam. It is possible that different types of process light are generated using different types of energy beams. Hence, the process light is only generated, if the energy beam directly irradiates a material, such as build material. Process light therefore, is distinguished from other types of radiation present in the additive manufacturing process, such as the energy beam itself, thermal radiation and the like, as these source of radiation, e.g. thermal radiation, do not require a direct irradiation with the energy beam to be generated. For example, build material that is heated to a defined temperature will emit thermal radiation regardless of whether it is currently directly irradiated with the energy beam.

By controlling the irradiation device dependent on the detection result, it is possible to ensure that the energy beam is guided onto the build plane and not onto other structures of the apparatus. Thus, damage to other structures of the apparatus can be prevented as the irradiation device can be controlled dependent on the detection result.

The safety device may particularly be adapted to reduce, in particular adapted to shut off, an energy beam power and/or an energy beam intensity of at least one energy beam, preferably all energy beams, dependent on the detection result. Thus, the safety device allows for a reduction of the energy beam power and/or the energy beam intensity of the at least one energy beam dependent on the detection of process light. Preferably, the energy beam power and/or the energy beam intensity of all energy beams can be reduced, if no process light is detected within a predefined region inside the process chamber, for example the build plane.

For example, it is possible to reduce the energy beam power of the energy beam that is generated and guided into the process chamber, if no process light is detected, for example in the build plane or in a region above the build plane. It is possible to reduce the energy beam power and/or the energy beam intensity of the at least one energy beam or to shut off or blank the at least one energy beam, preferably all energy beams, dependent on the detection result. After the energy beam power and/or the energy beam intensity has been reduced to a defined degree, in particular if the at least one energy beam has been shut off or blanked, it is possible to calibrate the energy beam to ensure that the energy beam is properly guided onto the build plane.

The term "shut off the at least one energy beam" can also refer to not guiding the energy beam into the process chamber, wherein an energy beam may be generated via a corresponding source, e.g. via the irradiation device, but the energy beam may not be guided into the process chamber. For example, a beam shutter may be provided that can control whether the energy beam is transmitted into the process chamber or blanked before it enters the process chamber. Of course, the energy beam may also be blanked inside the process chamber.

According to another embodiment of the present invention, the safety device may be adapted to detect whether the energy beam is generated and/or guided into the process chamber. The safety device may therefore, detect a status of the energy beam, in particular whether the energy beam is generated via the irradiation device and/or whether the energy beam is actually guided into the process chamber. Thus, it can be taken into calculation whether the energy beam is actually generated and guided into the process chamber, as process light can of course only be detected with the energy beam irradiating material inside the process chamber. If the energy beam is generated but not guided into the process chamber, for example due to blanking the energy beam with a beam shutter, the energy beam does not necessarily have to be shut off or reduced in the energy beam intensity or the energy beam power, if no process light is detected.

Further, the detection unit may be directed to the build plane and/or a region above the build plane, wherein the safety device may be adapted to generate an energy beam shut off signal dependent on the detection of process light and/or the detection result relating to whether the energy beam is generated and/or guided into the process chamber. Thus, it is possible to detect whether process light is generated in the build plane and/or in a region above the build plane. The process light, as described before, is generated by irradiating build material with the energy beam, wherein, for example, build material is partially vaporized and process light is emitted from the build material vapor. The detection unit may therefore, be arranged inside the process chamber or outside the process chamber and be directed to the build plane and/or the region above the build plane to detect whether process light is generated.

Further, the safety device detects whether the energy beam is generated and actually guided into the process chamber, as described before. Dependent on the detection results, it is possible to reduce the energy beam power and/or the energy beam intensity, if the energy beam is guided into the process chamber but no process light is detected. In this case, the energy beam is not guided properly onto the build plane and therefore, is guided onto and irradiates another structure of the apparatus, such as a functional unit of the apparatus or a process chamber wall, for instance. As the safety device is adapted to generate an energy beam shut off signal in this case, damage to the apparatus can be prevented, as the energy beam is shut off, if no process light is detected, i.e. the energy beam is not guided onto the build plane.

Preferably, the safety device may be adapted to generate an error message, if the energy beam is being switched off. Thus, an error message can be generated and, for example, displayed to a user or service personnel of the apparatus to notify that a malfunction, for example a misalignment or a misguiding, of the energy beam has been detected. Hence, information regarding the error in the additive manufacturing process can be provided and the energy beam can be calibrated accordingly.

The detection unit of the safety device may comprise at least one detection element, in particular a camera (CCD, CMOS), that is (exclusively) sensitive for process light, in particular process light comprising a wavelength between 400 - 700 nm. Therefore, the detection unit may comprise at least one detection element that is customized to receive and/or detect electromagnetic radiation in a wavelength corresponding to the wavelength of process light, e.g. between 400 - 700 nm. Hence, the detection element, which is built as or comprises for example a camera with a CCD sensor or a CMOS sensor, can detect whether process light is generated in the process chamber, in particular in the build plane or in a region above the build plane. In other words, the detection element can detect whether the energy beam irradiates build material arranged in the build plane or whether the energy beam is guided onto another structure inside the process chamber of the apparatus.

The detection unit may also comprise multiple detection elements, wherein the multiple detection elements may be provided for detecting radiation, in particular process light, with different wavelengths. Further, multiple detection elements may be directed to different regions inside the process chamber. For example, one detection element may be directed onto the build plane and one detection element may be directed to a region above the build plane.

Further, multiple detection elements may be arranged in different angles in that they can detect process light generated in the build plane propagating in different directions. Thus, the reliability and the detection of process light can be increased, since the detection of process light can be performed from different angles to prevent a structure of the apparatus to cover the process light generated due to irradiation of build material and therefore, falsely controlling the irradiation device. Instead, the build plane and/or the region above the build plane can be monitored from different angles ensuring that generated process light is detected via the detection unit.

Additionally or alternatively, it is possible that a filter unit is provided that is adapted to filter radiation propagating towards the at least one detection element, in particular radiation deviant from process light. According to this embodiment, it is ensured that only process light is detected via the detection element and that other radiation does not lead to the generation of a "shut off signal" or to a respective reduction of the energy beam power and/or the intensity of the energy beam. Electromagnetic radiation other than the process light can be filtered via the filter unit, wherein a false generation of a shut off signal can be prevented, as only radiation that can transmit the filter unit is incident on the detection element and can be detected.

For example, the filter unit may be adapted to filter thermal radiation and/or at least one part of the energy beam that propagates towards the at least one detection element. Thus, the irradiation is not detected via the detection element, as the filter unit is adapted to filter the thermal radiation propagating towards the at least one detection element. Also, a part of the energy beam, for example a reflected part of the energy beam that may be reflected at a structure of the apparatus does not lead to a corresponding detection via the detection element. Thus, it can be prevented that the energy beam that is not properly guided onto the build plane but reflected as it is incident on a structure of the apparatus, such as a process chamber wall, is partially reflected towards the detection element and is falsely detected as process light. Usually, process light deviates from the energy beam, e.g. in terms of the wavelength, but if an energy beam is used that comprises the same wavelength as process light, a false detection could be possible. This can be prevented by filtering the respective part of the energy beam that propagates towards the at least one detection element, for example via polarization filtering.

Besides, the invention relates to a safety device for an apparatus for additively manufacturing three-dimensional objects, in particular an inventive apparatus as described before, wherein the safety device comprises at least one detection unit adapted to detect process light that is generated by an irradiation of build material, wherein the safety device is adapted to control an irradiation device of the apparatus dependent on the detection result.

Additionally, the invention relates to a method for operating an apparatus for additively manufacturing of three-dimensional objects by means of successive layerwise selective irradiation and consolidation of layers of a build material which can be consolidated by means of an energy beam, in particular an inventive apparatus, as described before, wherein the apparatus comprises an irradiation device adapted to generate at least one energy beam for irradiating the build material, wherein process light that is generated by the irradiation of build material is detected, wherein the irradiation device is controlled dependent on the detection result.

According to the inventive method, process light that is generated by irradiating build material is detected and the irradiation device is controlled dependent on the detection result. Thus, dependent on whether process light is generated, the irradiation device can be controlled. For example, an energy beam power and/or an energy beam intensity of at least one energy beam, in particular of the energy beam used in the additive manufacturing process, may be reduced, in particular at least one energy beam may be shut off dependent on the detection result.

Preferably, it can be detected whether process light is generated, in particular in the build plane or in a region above the build plane. Hence, dependent on whether the energy beam is generated and guided into the process chamber a reduction of an energy beam power and/or an intensity of the energy beam is feasible. The at least one energy beam may in particular be switched off, if the energy beam is generated and guided into the process chamber and no process light is detected in or above the build plane.

Therefore, it is detected whether the energy beam is present inside the process chamber, i.e. guided into the process chamber to irradiate build material arranged in the build plane. Further, it is detected whether process light is generated. If the energy beam is guided into the process chamber and process light is generated and detected in the build plane or in a region above the build plane, it is ensured that the additive manufacturing process is properly performed regarding the process safety, as the detection result indicates that the energy beam is guided onto the build plane and irradiates build material arranged in the build plane. However, if it is detected that the energy beam is guided into the process chamber and no process light is detected in the build plane and/or in a region above the build plane, the detection result indicates that the energy beam is present inside the process chamber but is not guided onto the build plane. In this case the energy beam power and/or the intensity of the at least one energy beam is reduced, in particular the at least one energy beam is switched off to prevent the structure of the apparatus, in particular the inside of the process chamber, from being damaged by the energy beam not being guided properly onto the build plane.

Self-evidently, all details, features and advantages described with respect to the inventive apparatus are fully transferable to the inventive safety device and the inventive method and vice versa. Thus, all described embodiments can arbitrarily be combined.

Exemplary embodiments of the invention are described with reference to the Fig. The Fig. are schematic diagrams, wherein
- Fig. 1: shows an inventive apparatus with an inventive safety device; and
- Fig. 2: shows a flow diagram of the inventive method.

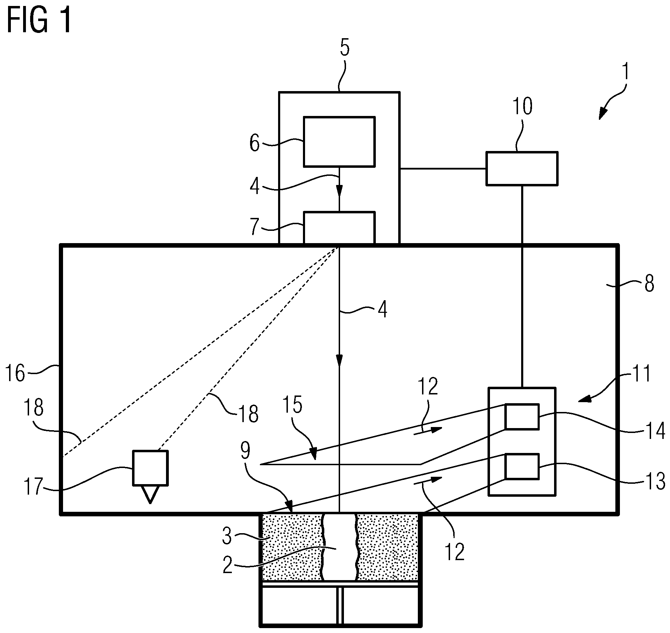

Fig. 1 shows an apparatus 1 for additively manufacturing of three-dimensional objects 2 by means of successive layerwise selective irradiation and consolidation of layers of a build material 3 which can be consolidated by means of an energy beam 4, such as a laser beam or an electron beam, for instance. According to this exemplary embodiment, the apparatus 1 comprises an irradiation device 5 with a beam generating unit 6 and a beam guiding unit 7. The beam generating unit 6 is adapted to generate an energy beam 4, such as a laser beam or an electron beam and the beam guiding unit 7 is adapted to guide the energy beam 4 into a process chamber 8 of the apparatus 1. The beam guiding unit 7 is further adapted to blank the energy beam 4 in that the energy beam 4 that is generated via the beam generating unit 6 is not guided into the process chamber 8.

The energy beam 4 generated via the beam generating unit 6 of the irradiation device 5 can be guided via the beam guiding unit 7 onto and over a build plane 9 arranged inside the process chamber 8. Thus, build material 3 arranged in the build plane 9 can be selectively irradiated and thereby consolidated via the energy beam 4.

The apparatus 1 further comprises a safety device 10 with a detection unit 11. The detection unit 11 is adapted to detect process light 12 that is generated by the irradiation of build material 3. The detection unit 11 comprises two detection elements 13, 14, wherein the detection element 13 is directed to the build plane 9 and the detection element 11 is directed to a region 15 above the build plane 9. Thus, process light 12 that is generated via the energy beam 4 directly irradiating build material 3 arranged in the build plane 9 or at least partially vaporized build material 3 in the region 15 above the build plane 9, can be detected via the detection unit 11.

The safety device 10 is adapted to control the irradiation device 5 dependent on the detection result. The safety device 10 is in particular adapted to detect whether the energy beam 4 is generated via the irradiation device 5 and guided into the process chamber 8 of the apparatus 1. Thus, the beam generating unit 6 and the beam guiding unit 7 are adapted to send respective signals to the safety device 10.

Hence, if the energy beam 4 is generated and guided into the process chamber 8 and process light 12 is detected via the detection unit 11, it is ensured that process safety requirements are met, as the energy beam 4 is properly guided onto the build plane 9 and irradiates build material 3 in the build plane 9. If the detection result indicates that the energy beam 4 is generated and guided into the process chamber 8 but no process light 12 generated, the detection result indicates that the energy beam 4 is not properly guided onto the build plane 9 but irradiates other structures, such as a process chamber wall 13 or an application unit 17, for instance. Respective energy beams 18 that are misaligned or misguided and therefore, do not irradiate build material 3 in the build plane 9, are depicted via a dashed lines.

Thus, if the energy beam 4 is guided into the process chamber 8 and no process light 12 is detected via detection unit 11, the energy beam power of the energy beam 4 and/or the intensity of the energy beam 4 can be reduced by the beam generating unit 6 or via the beam guiding unit 7 or it is possible to blank the energy beam 4 via the beam guiding unit 7, as described before. It is also possible to switch off the energy beam 4 entirely via the beam generating unit 6. Therefore, if the detection result indicates that the energy beam 4 is not guided onto the build plane 9 but irradiates another structure inside the process chamber 8 of the apparatus 1, such as the process chamber wall 16 or the application unit 17, the energy beam 4 can be switched off, blanked or reduced in intensity or energy beam power. This allows for preventing damage to various structures of the apparatus 1, as exemplarily depicted via the process chamber wall 16 or the application 17. After the energy beam 4 has been reduced / blanked or switched off, an error message can be generated and sent to a user / service personnel or an operator of the apparatus 1 and a calibration of the energy beam 4 can be performed to ensure that the energy beam 4 is guided properly onto the build plane 9.

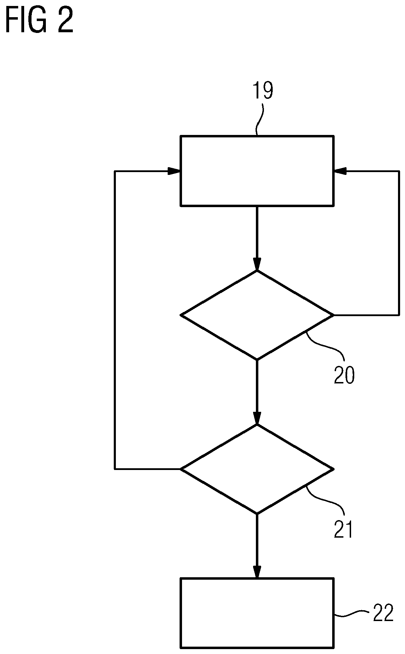

Fig. 2 shows a flow diagram of the inventive method that can, of course, be performed on the inventive apparatus 1, preferably using the safety device 10. In a first state 19 the energy beam 4 is in a switched off state or is not guided into the process chamber 8. As described before, a determination can be made, for example via the detection unit 11, whether the energy beam 4 is generated and guided into the process chamber 8. Thus, in a second step 20 of the method, it can be determined or detected whether the energy beam 4 is generated and guided into the process chamber 8. If the energy beam 4 is not generated and/or not guided into the process chamber 8, the inventive method remains in the state 19, in which the energy beam 4 is not generated and/or not guided into the process chamber 8.

If it is detected that the energy beam 4 is generated and guided into the process chamber 8, a detection can be made in another step 21, whether process light 12 is generated in the build plane 9 and/or in a region 15 above the build plane 9. If process light 12 is detected, the inventive method can continue in a state 22 in which the irradiation of build material 3 in the build plane 9 can be continued. If the detection result indicates that no process light 12 is generated in the build plane 9 or in a region 15 above the build plane 9, the energy beam 4 is switched off / blanked or reduced in beam power or intensity and the inventive method returns to the state 19 in which the energy beam 4 is switched off and/or blanked.

## Claims

1. Apparatus (1) for additively manufacturing of three-dimensional objects (2) by means of successive layerwise selective irradiation and consolidation of layers of a build material (3) which can be consolidated by means of an energy beam (4), wherein the apparatus (1) comprises an irradiation device (5) that is adapted to generate at least one energy beam (4) for irradiating the build material (3), **characterized by** a safety device (10) comprising at least one detection unit (11) adapted to detect process light (12) that is generated by the irradiation of build material (3), wherein the safety device (10) is adapted to control the irradiation device (5) dependent on a detection result.

2. Apparatus according to one of the preceding claims, **characterized in that** the safety device (10) is adapted to reduce an energy beam power and/or an energy beam intensity of at least one energy beam (4), in particular all energy beams (4), in particular adapted to shut off at least one energy beam (4), dependent on the detection result.

3. Apparatus according to one of the preceding claims, **characterized in that** the safety device (10) is adapted to detect whether the energy beam (4) is generated and/or guided into the process chamber (8).

4. Apparatus according to one of the preceding claims, **characterized in that** the safety device (10) is adapted to detect whether process light (12) is generated in the build plane (9) or in a region (15) above the build plane (9).

5. Apparatus according to one of the preceding claims, **characterized in that** the detection unit (11) is directed to the build plane (9) and/or a region (15) above the build plane (9), wherein the safety device (10) is adapted to generate an energy beam shut-off-signal dependent on the detection of process light (12) and/or the detection result relating to whether the energy beam (4) is generated and/or guided into the process chamber (8).

6. Apparatus according to one of the preceding claims, **characterized in that** the safety device (10) is adapted to generate an error message, if the energy beam (4) is being switched off.

7. Apparatus according to one of the preceding claims, **characterized in that** the detection unit (11) comprises at least one detection element (13, 14), in particular a camera, that is sensitive for process light (12), in particular process light (12) comprising a wavelength between 400 - 700nm.

8. Apparatus according to one of the preceding claims, **characterized in that** the detection unit (11) comprises multiple detection elements (13, 14).

9. Apparatus according to one of the preceding claims, **characterized by** a filter unit adapted to filter radiation propagating towards the at least one detection element (13, 14), in particular radiation deviant from process light (12).

10. Apparatus according to one of the preceding claims, **characterized in that** the filter unit is adapted to filter thermal radiation and/or at least one part of the energy beam (4) propagating towards the at least one detection element (13, 14).

11. Safety device (10) for an apparatus (1) for additively manufacturing three-dimensional objects (2), in particular an apparatus (1) according to one of the preceding claims, **characterized in that** the safety device (10) comprises at least one detection unit (11) adapted to detect process light (12) that is generated by an irradiation of build material (3), wherein the safety device (10) is adapted to control an irradiation device (5) of the apparatus (1) dependent on a detection result.

12. Method for operating an apparatus (1) for additively manufacturing of three-dimensional objects (2) by means of successive layerwise selective irradiation and consolidation of layers of a build material (3) which can be consolidated by means of an energy beam (4), in particular an apparatus (1) according to one of the claims 1 to 10, wherein the apparatus (1) comprises an irradiation device (5) adapted to generate at least one energy beam (4) for irradiating the build material (3), **characterized in that** process light (12) that is generated by the irradiation of build material (3) is detected, wherein the irradiation device (5) is controlled dependent on a detection result.

13. Method according to one of the preceding claims, **characterized in that** an energy beam power and/or an energy beam intensity of at least one energy beam (4), in particular all energy beams (4), is reduced, in particular at least one energy beam (4) is shut off, dependent on the detection result.

14. Method according to one of the preceding claims, **characterized by** a detection whether process light (12) is generated, in particular in or above the build plane (9).

15. Method according to one of the preceding claims, **characterized by** a detection whether the energy beam (4) is generated and guided into the process chamber (8), wherein an energy beam power and/or an intensity of the at least one energy beam (4) is reduced or the at least one energy beam (4) is switched off, if the energy beam (4) is generated and guided into the process chamber (8) and no process light (12) is detected in or above the build plane (9).
